Europäisches Patentamt

European Patent Office

Office européen des brevets

(11) Publication number: **0 403 807 B1**

# EUROPEAN PATENT SPECIFICATION

(45) Date of publication of patent specification: **27.12.95**　(51) Int. Cl.⁶: **G01N 29/04**, G01N 29/24

(21) Application number: **90109616.4**

(22) Date of filing: **21.05.90**

(54) **Ultrasonic inspection device for detecting defects in solid objects**

(30) Priority: **22.06.89 JP 160080/89**

(43) Date of publication of application:
**27.12.90 Bulletin 90/52**

(45) Publication of the grant of the patent:
**27.12.95 Bulletin 95/52**

(84) Designated Contracting States:
**DE GB**

(56) References cited:
EP-A- 0 228 720　　EP-A- 0 284 689
WO-A-83/02844　　AT-A- 379 898
FR-A- 1 093 472　　FR-B- 2 281 567
GB-A- 2 033 579　　US-A- 2 784 325
US-A- 3 147 169　　US-A- 3 472 065

(73) Proprietor: **NISSAN MOTOR CO., LTD.**
**No.2, Takara-cho, Kanagawa-ku**
**Yokohama City (JP)**

Proprietor: **Higo, Yakichi**
**5-3-1-101, Yagumo**
**Meguro-ku**
**Tokyo (JP)**

(72) Inventor: **Higo, Yakichi**
**No. 5-3-1-101,**
**Yagumo,**
**Meguro-ku**
**Tokyo (JP)**
Inventor: **Kazama, Shigenori**
**Reonahaitsu 102**
**No. 1-34-15, Tomiokanishi**
**Kanazawa-ku,**
**Yokohama City (JP)**

(74) Representative: **TER MEER - MÜLLER - STEIN-**
**MEISTER & PARTNER**
**Mauerkircherstrasse 45**
**D-81679 München (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

### BACKGROUND OF THE INVENTION

#### Field of the Invention

The present invention relates to an ultrasonic sensing device according to the preamble of claim 1, for the non-destructive detection of defects, such as voids, or poorly adhering layers in solid objects and laminated materials.

#### Description of the Prior Art

In the art of ultrasonic detection, various methods are known for non-destructively inspecting solid objects. Among these methods are an ultrasonic transmission technique, a reflection technique, and an ultrasonic resonance technique. Which of the above methods is employed, is usually determined according to the test conditions, and the number of transducers used in the test device.

The sensing methods may be further sub-divided into a so called vertical method, angular method, immersion method, panel wave method, surface wave method, transmission method, thickness detection method, the holographic imaging method, and the defect detection arrangement method.

Some prior art detection methods are disclosed in detail in The Third Edition of The Steel handbook Volume IV "Alloys: Tests and Analysis" October 30 1972, Published by Maruzen Co. Ltd. on pages 447-448 under the heading "Non-destructive Tests".

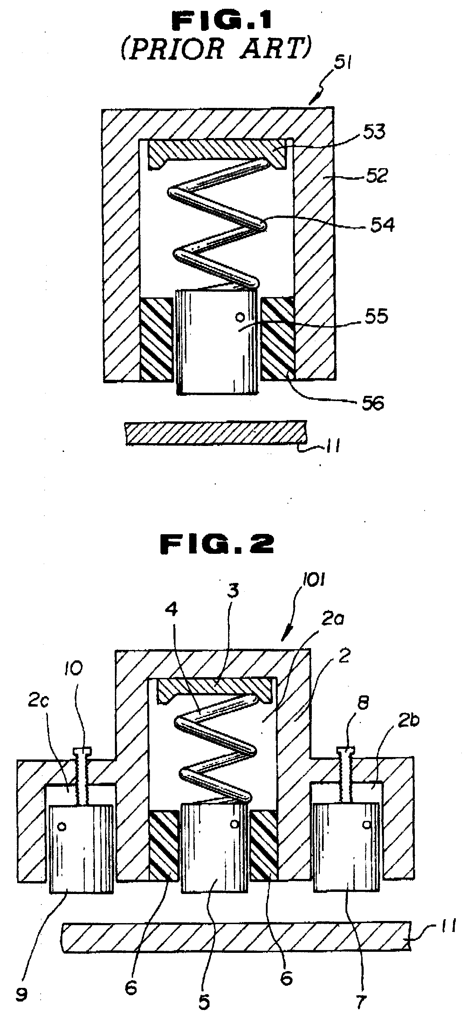

In Fig. 1 an example is given of a sensor assembly 51 according to the prior art. A housing unit 52, includes an insulating member 53 which is disposed in the blind end of a elongate bore, a spring 54 and an ultrasonic transducer 55. The spring is arranged to bias the ultrasonic transducer 55 against an object 11 under test.

Within the interior of the housing unit 52, a lateral buffer member 56 is disposed, which serves to maintain the transducer in position while insulating the housing unit 52 from the ultrasonic transducer 55.

In detection operations using the Fig. 1 device, it is common to use the resonance method or the reflection method. On the other hand, in cases where two transducers are provided, it is known to employ the transmission technique.

As is well known, with these methods, the reflected or the transmitted signals and/or resonance frequencies are analyzed in order to determine the characteristics of the object to be tested. In the above techniques however, problems have been encountered in that the strength, and general characteristics of the received measurement signals are rather strongly influenced by the pressure with which the transducer assembly is maintained in engagement with the object to be tested. For this reason, considerable skill on the part of the operator, has been required in order to obtain reproducible readings. This has tended to limit the applicability of these methods and has prevented more general use.

Accordingly, there has been a need to provide a technique of holding an ultrasonic transducer in engagement with an object to be tested in a manner which alleviates the need for a high level of skill on the part of the operator.

Another disadvantage encountered in the ultrasonic sensing devices of the prior art lies in the fact that, a single transducer is usually used for both emitting and receiving the inspection signal. Because of this double function, compromises must be made in the construction of the transducer, in order to allow it to serve equally well as an emitter and receiver. Another problem with this arrangement is that the transducer must be switched very rapidly between the emitting and receiving modes, and thus renders the signal sending and receiving sections of the control device, complex.

In view of the above problems, a method, which is disclosed in JP-A-63-120252, was developed for detecting the presence or absence adhesion between the layers of laminated material, and for determining the bonding strength of an adhesive when it is present.

In the above disclosed device the problem remains that a rather high level of skill is still required of the user, in order to obtain satisfactory reproducible results.

An ultrasonic sensing device according to the preamble of claim 1 is disclosed by US-A-2 784 325. This known device is arranged to test solid bodies for e.g. cracks and comprises an ultrasonic emitter disposed between and close to the first and second receiving transducer. However, since the output terminals of the first and second receiving transducers are connected with a single common output signal line, said first and second receiving transducers form in fact a single two-part receiving transducer which partly embraces the ultrasonic emitter. Since only the combined, i.e., added output signals of the first and second receiving transducer are available from said single output signal line, this known ultrasonic sensing device is also encountered with the problems mentioned above in connection with the received signals depending strongly on the pressure with which the device is maintained in engagement with the object to be tested.

It is therefore the object of the present invention to provide an ultrasonic sensing device of such type which obviates the need for a high level of operator skill, enables reproducible results to be readily obtained and is easy to use.

This object is achieved by an ultrasonic sensing device according to claim 1.

Preferred embodiments are described in the subclaims.

## BRIEF DESCRIPTION OF THE DRAWINGS

Fig 1 is cross-section view of a sensor assembly according to the prior art;

Fig. 2 is a cross-section view of a sensor assembly according to the first embodiment of the present invention;

Fig. 3a is a schematic depiction of a sensor assembly according to the invention in contact with an object which includes a defect, wherein the positions of the defect, and the respective transducers are indicated;

Figs. 3b and 3c are timing charts which graphically show the fluctuations in the signals produced by the receiving transducers 7 and 9 as they pass the defect;

Fig. 3d is a timing chart showing the manner in which the defect is detected using a value Z (derived by subtracting the data of Figs. 3(c) and 3(d) from one another), with a predetermined threshold level;

Fig. 4 is a schematic depiction of a sensing arrangement according to the invention;

Fig. 5 is a cross-section of a sensor assembly according to a second embodiment of the invention;

Fig. 6 is a cross-section of a sensor assembly according to a third embodiment of the invention;

Figs. 7a and 7b are a cross-sectional plan and side elevational views of a sensor assembly according to a fourth embodiment of the invention;

Fig. 8 is a cross-section of a sensor assembly according to a fifth embodiment of the invention, with a sensing circuit, associated therewith, depicted schematically;

Fig. 9 is as schematic depiction of a sensing arrangement according to a sixth embodiment of the invention;

Fig. 10 is a cross-section of a sensor assembly according to a seventh embodiment of the invention, with a sensing circuit, associated therewith, depicted schematically;

Figs. 11 and 12 are cross-sections of a sensor assembly according to an eighth embodiment of the invention;

Figs. 13 and 14 are cross-sections of a sensor assembly according to a ninth embodiment of the invention;

Fig. 15 is a cross-section of a sensor assembly according to a tenth embodiment of the invention;

Fig. 16 is a cross-section of a sensor assembly according to an eleventh embodiment of the invention;

Fig. 17 is a cross-section of a sensor assembly according to a twelfth embodiment of the invention; and

Fig. 18 is a schematic depiction of an alternative arrangement of a transducer holder according to the invention.

## DETAILED DESCRIPTION OF THE PREFERRED EMBODIMENTS

Fig. 2 shows a sensor assembly 101 according to a first embodiment of the instant invention. The sensor assembly 101 comprises a housing unit 2, having an emitter receiving bore or cavity 2a within which an ultrasonic emitter 5, which is adapted for emitting an ultrasonic sensing signal, is disposed. Receiving transducers 7 and 9, which are adapted for receiving such types of signals, are provided in a pair of transducer receiving bores 2b and 2c.

An insulating member 3, formed of a resilient material, and a spring 4, support the emitter 5 within the bore 2a. The upper end of the spring 4 is arranged to engage the insulating member 3, which is provided on the upper inside surface of the emitter receiving cavity 2a. The lower end of the spring 4 supports the ultrasonic emitter 5. A lateral buffer 6 is disposed in the mouth of the bore 2a in a manner to surround the emitter 5 and isolate the the same from the housing unit 2.

The receiving transducers 7, 9 are connected to the housing unit 2 by means of height adjuster screws 8, 10 which serve to determine the positions of the receiving transducers 7 and 9 within the bores 2b, 2c.

The ultrasonic emitter 5 and the receiving transducers 7 and 9 are arranged in a manner such that the spacing therebetween is fixed in the horizontal directions. On the other hand, the heights of the receiving transducers 7 and 9, are adjustable (viz., the transducers are adjustable in the vertical direction).

For simplicity of disclosure, the embodiment of Fig. 2 comprising the single ultrasonic emitter 5 and the two receiving transducers 7 and 9, has been chosen to illustrate the principles of the instant invention. It will be understood, however, that arrangements wherein more receiving and or emitting transducers are within the scope of the invention.

With this arrangement, when the sensor assembly 101 is employed in an inspection/detection operation, it is held against the surface of the object to be tested, so that the receiving transducers 7 and 9 are in firm contact therewith. In this state, the ultrasonic emitter 5 is urged into engagement with surface of the object to be tested, by means of the spring 4. While the sensor assembly 1 is maintained in this state, an ultrasonic sensing signal is emitted from the ultrasonic emitter 5. This ultrasonic sensing signal propagates through the object to be tested and is picked up by the receiving transducers 7 and 9, which are arranged to be equidistant from the ultrasonic emitter 5.

Under the above conditions, if the object 11 under inspection is free of defects, the signals received by the respective receiving transducers 7 and 9 are essentially identical. If, on the other hand, a defect or inconsistency exists in the vicinity of one of the receiving transducers 7 and 9, the received signals exhibit a difference.

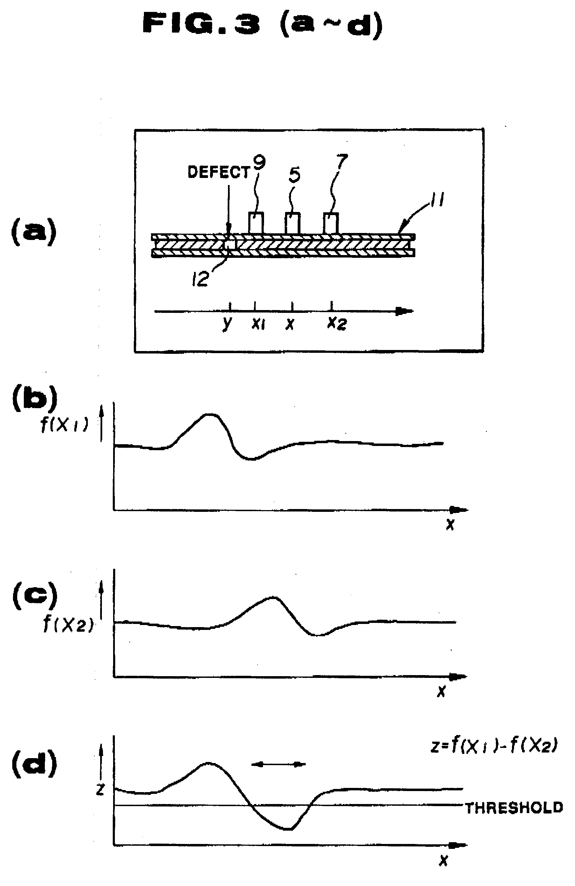

In Fig. 3 the emitter 5 and the receiving transducers 7 and 9 are schematically depicted in engagement with an object 11 under test which contains a defect or void 12.

Given that the positions of the receiving transducer 9, emitter 5, and the receiving transducer 7 in the direction indicated by the arrow in Fig. 3, are X1, X and X2 respectively; the position of the defect is given as Y; and the ultrasonic signals received by the respective receiving transducers 9 and 7 are f(X1) and f (X2), respectively, then it can be demonstrated that under these conditions:

$$\text{If } Y < X1 < X < X2, X1 < X < X2 < Y$$
$$\text{then } f(X1) = f(X2);$$
$$\text{If } X1 < Y < X < X2$$
$$\text{then } f(X1) > f(X2);$$
$$\text{If } X1 < X < Y < X2$$
$$\text{then } f(X1) < f(X2).$$

Given that:

$$Z = f(X1) - f(X2) \qquad (1)$$

The deviation of Z in either the positive or negative directions by more than a predetermined amount will indicate the presence of a defect in the vicinity of the sensor assembly. In practice, to simplify the operation required in a sensor signal processor 16 to make the defect determination, it is adequate to set a threshold or slice value, as illustrated in Fig. 3d, and to determine if the value of Z crosses the same.

The characteristic of this type of sensing operation which sets it above those of the prior art is that, since the signals of the respective receiving transducers 7 and 9 are compared only to each other in order to obtain the value Z, volume or frequency deviations, or distortion, in the signal output of the ultrasonic emitter 5, have no tendency to influence the value Z in such a manner as to cause a false indication of the presence of a defect 12 in the object 11. Thus, the dependability, of the sensing signal obtained, is dramatically increased.

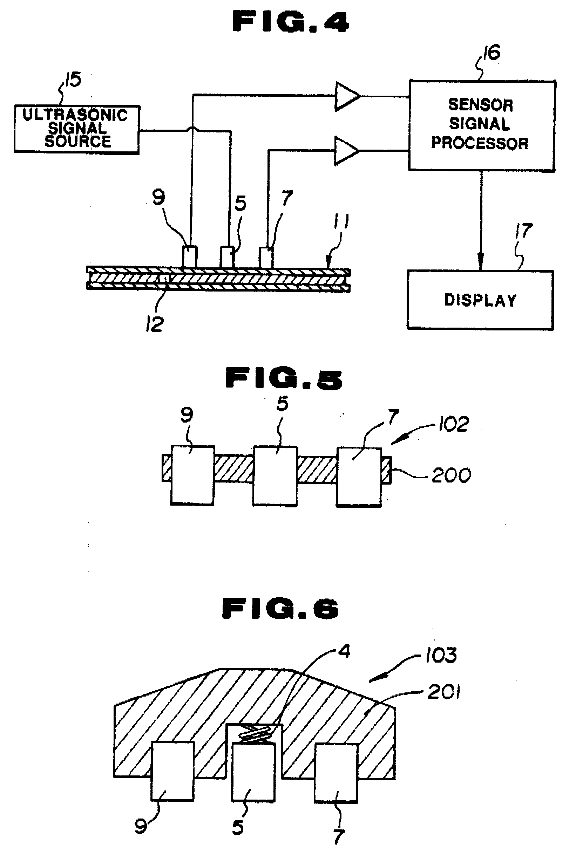

In Fig. 4 the sensor assembly 101 and the associated circuitry are depicted schematically. The ultrasonic emitter 5 is coupled to an ultrasonic signal source 15, by which it is driven to output the ultrasonic sensing signal. This signal, as has been mentioned above, is propagated through the object 11 under test. This propagated ultrasonic sensor signal is picked up by the receiving transducers 7 and 9, by which it is converted into an electronic signal, which is, in turn, supplied to the sensor signal processor 16.

Within the sensor signal processor 16, the signal received from one of the receiving transducers 7 and 9, is treated as a reference signal to which that of the other is compared, in order to discern the presence of a defect 12. Thereafter, the result of the determination, made by the sensor signal processor 16, as to whether or not a defect 12 is present, is shown on a display 17.

With this arrangement, since the sensor signal processor 16 compares the sensed signals of the receiving transducers 7 and 9 directly rather than using a fixed value, the quality of the contact, between the object to be tested and the sensor assembly 101, is inherently compensated for in the data processing stage. Therefore, it is possible when using the sensor assembly 1 according to the invention, to use analog processing to discern the presence of a defect.

For example, by employing an R.M.S. meter in connection with a differential input circuit in the sensor signal processor 16, it is possible, using the sensor assembly 101 according to the present invention, to provide a defect detection unit which is easier to use, more dependable, and simpler than the ultrasonic sensor assemblies of the prior art. What is more, with this arrangement, these advantages are realized in a device which provides a real time indication of defects in the object under test.

A further advantage of the ultrasonic sensing arrangement of the instant invention, is the fact that the sensing signal is no longer limited to the pulsed signals commonly used in the prior art arrangements and can be tailored to suit the material, and to provide a more accurate picture of the internal characteristics of the object under test. For example, since the wave shape and frequency, of the sensing signal, is not limited, it may be deemed desirable to provide a signal which consists of random noise within a selected frequency band, or para-random wave forms at selected frequencies. Sensing signals in the frequency band of 0.1Hz to 10MHz have been used with good results.

Fig. 5 shows a second embodiment of a sensor assembly 102 according to the invention. It has been found that, in cases where surface of the object to be tested is perfectly flat, it is possible to dispense with the spring 4 and the other buffer members and simply arrange a housing unit 200 such that it maintains the ultrasonic emitter 5 and the receiving transducers 7 and 9 in such a manner that their emitting and sensing surfaces lie in a common plane.

On the other hand, since it is extremely difficult, to ensure that the surfaces of the ultrasonic emitter 5 and receiving transducers 7 and 9 lie perfectly within a common plane, and that the surface of the object to be tested is perfectly flat, it has been found that, to assure an accurate detection signal, it is preferable that an arrangement wherein the ultrasonic emitter 5 is resiliently mounted, be employed.

In a sensor assembly 103, according to the third embodiment of the invention (depicted in Fig. 6) the arrangement of the elements is essentially the same as that of the first embodiment with the exception that the height adjuster screws 8 and 9 are omitted, and the receiving transducers 7 and 9 are affixed directly to the housing unit 201. The ultrasonic emitter 5 is, as in the first embodiment, resiliently coupled to the housing unit 201. Thus, although the heights of the receiving transducers 7 and 9 are not adjustable as in the first embodiment, they essentially define only two contact points on a line on the surface of the object to be tested, when the sensor assembly is held in contact therewith. The ultrasonic emitter 5 is resiliently urged into contact with the surface of the object under test by the spring. Thus, unevenness or curvature of the surface, of the object to be tested, is absorbed or compensated for by the spring 4. Therefore, regardless of the curvature of the surface of the object to be tested, the operation for determining its internal characteristics can be carried out accurately.

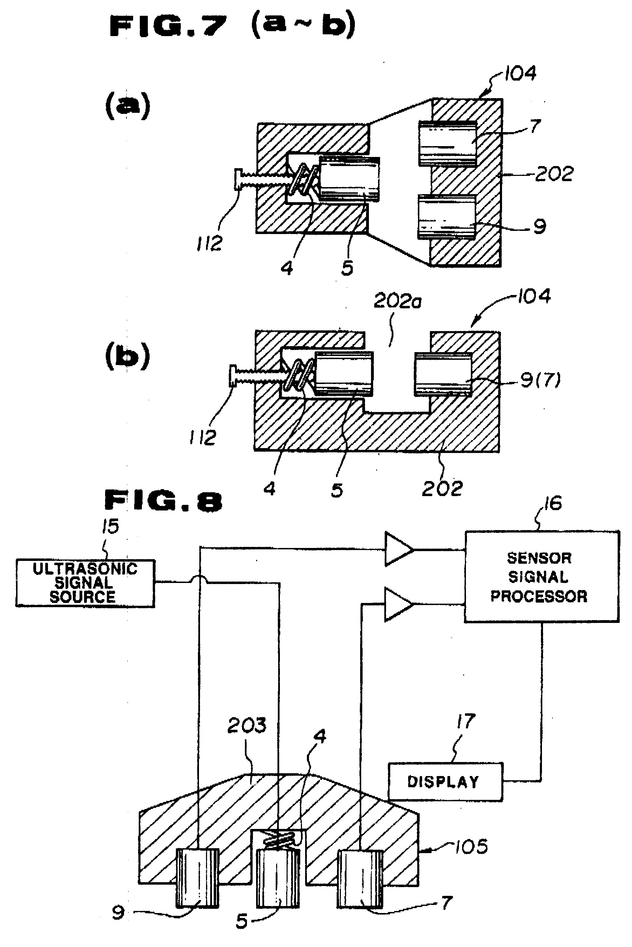

In Figs. 7a and 7b fourth embodiment of a sensor assembly according to present invention is depicted. The sensor assembly 104 according to the fourth embodiment differs from that of the first and second embodiments in that the housing unit 202 defines a gap 202a, and the ultrasonic emitter 5 is arranged so as to oppose the receiving transducers 7 and 9, across said gap 202a.

With this arrangement the receiving transducers 7 and 9 pick up the ultrasonic signal emitted from the ultrasonic emitter 5, from, the opposite side of the object to be tested. In this arrangement the ultrasonic emitter 5 is supported, on the housing unit 202, by means of a pressure adjuster screw 112, by which the position of the ultrasonic emitter 5 can be adjusted with respect to the receiving transducers 7 and 9, and a spring 4. Thus, the overall arrangement is somewhat similar to that of a C-clamp.

It will be noted that the mode of contact between the ultrasonic emitter 5 and the receiving transducers 7 and 9, and the object to be tested is not limited to direct contact. With the embodiments disclosed the same effect can be achieved as the prior art arrangements wherein oil or water have been used and/or the arrangements wherein rubber tires have been utilized.

Fig. 8 shows a sensor assembly 105, according to a fifth embodiment of the present invention. This embodiment is essentially identical to the first and third ones with the major exception that the display 17 is mounted directly. on the housing unit 203.

This arrangement has the advantage that the operator of the sensing device can see the display 17 indicating the internal condition of the object to be tested, in real time, without having to take his (or her) eyes from the object under test. Thus, it is easy to visually pinpoint the spot, on the surface the object to be tested, beneath which a defect is present.

A further advantage of this arrangement is that the display can indicate to the user exactly when and where, on the object, the proper contact between the sensor assembly and object to be tested becomes inadequate to provide an accurate indication of the internal state of the object to be tested, in other words, when the output of the receiving transducers 7 and 9 fall beneath a predetermined value.

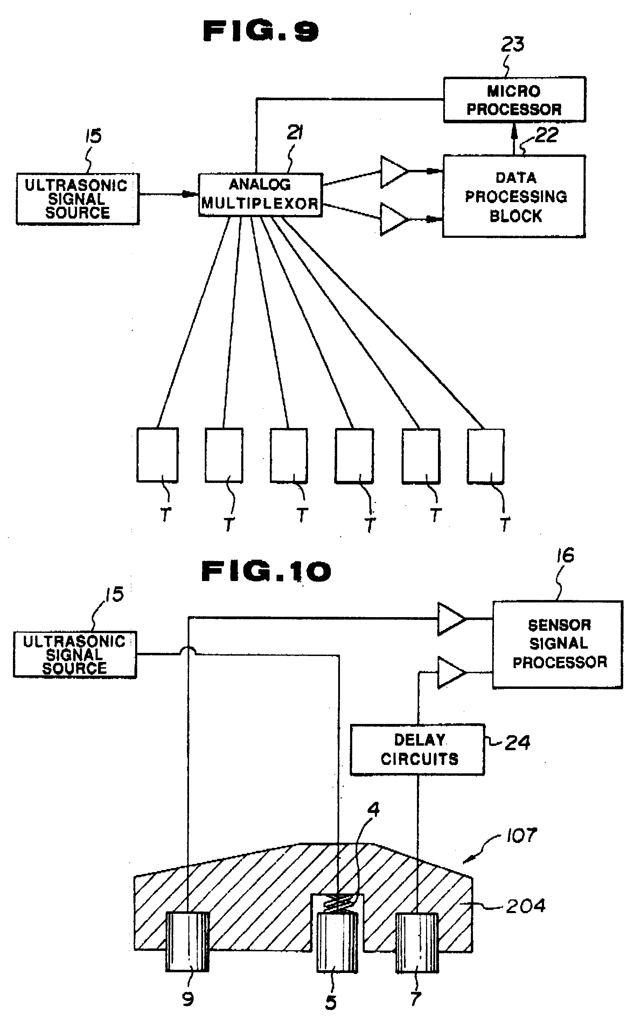

In the sixth embodiment of the invention, shown in Fig. 9, another data processing circuit arrangement is exemplified. In this arrangement, an analog multiplexor 21 is coupled with a plurality (six in this particular case) transducers T. The data from the analog multiplexor 21 is supplied to the data processing block 22 and from there to the micro-processor 23.

The transducers T are of a variety which can both output and receive an ultrasonic signal. With this arrangement, the multiplexer can send and receive signals from a group selected from among any of the transducers T. For example, the multiplexer may operate one of the transducers T as an ultrasonic emitter, and the two adjacent thereto as the receiving transducers. Thus, the transducers are operated in groups of three, or "triplets", and any three transducers can be incorporated into a triplet.

With this arrangement, the triplets are sequentially selected from the plurality of transducers, and their signals are processed to determine whether a defect, is present in the vicinity of any triplet of the transducers T. Thus, a large portion of the surface of the object can be quickly and accurately inspected, without moving the individual transducers T.

Another advantage of this embodiment is that, since the transducers do not need to be moved across the surface of the object to be tested, mechanical instability, in the connection between the transducers and the object to be tested, is eliminated.

Still a further advantage of this embodiment is that, even if a defect lies directly beneath an emitting transducer, the situation wherein essentially identical signals are received by the adjacent receiving transducers, when another triplet is selected the transducer which previously was arranged to emit becomes a receiving transducer. Accordingly, signal Z undergoes a change which indicates a defect and accurate inspection is assured.

As will be apparent to those skilled in the art, although in the Fig. 9 embodiment, the triplets or groups of three are used, larger groups are also possible. It will also be understood that although in the above disclosed embodiment the individual transducers must be capable of both emitting and receiving the ultrasonic signal, other embodiments are conceivable wherein at least two of the transducers are arranged to receive the signal only and the remaining transducers are arranged to emit only.

In the seventh embodiment of the present invention, shown schematically in Fig. 10, yet another ultrasonic sensing unit circuit is shown. This arrangement is essentially identical to that disclosed in connection with Fig. 4, with the exception that a delay circuit 24 is provided between one or both of the receiving transducers and the sensor signal processor 16.

With this provision, compensation in the signal can be made in cases where the distance between the transducer 9, which does not have the delay circuit 24, and the ultrasonic emitter 5, is greater than that between the receiving transducer 7 which is coupled to the delay circuit 24, and the ultrasonic emitter 5.

This feature is useful in cases where the housing unit 204 of the sensor assembly 107, must for some reason, be constructed such that the distances between the transducers are not equal.

It is also possible with this arrangement, to vary the distance between the receiving transducer 9 and the ultrasonic emitter 5, while adjusting the delay applied by the delay circuit 24 to the signal output of the receiving transducer 7. In such cases, the appropriate offset or delay can be set with the use of a test piece.

Another advantage of this arrangement is that compensation can be made for disparity between the performance characteristics of the respective receiving transducers 7 and 9, which may result from such factors as different types of transducers being used, differing output characteristics of individual transducers in a given production line, or from effects of the housing unit 204 itself on the outputs of the respective transducers.

Since, in the present invention, the ultrasonic emitter 5 and the receiving transducers 7 and 9 are provided separately, it is not necessary to perform the rapid switching operation between the emitting and sending modes, as is required in the ultrasonic sensor assemblies according to the prior art.

What is more, in the sensing assembly according to the present invention, since there are at least two receiving transducers, a comparison can automatically be made between the signals received by the two, so as to provide an accurate indication of the sensed characteristics of the object to be tested without the need for a great deal of specialized skill on the part of the operator.

Yet another advantage of the ultrasonic sensing arrangement according to the invention is that, since the emitting and receiving transducers are mutually distinct and operate simultaneously and there is no need to generate the pulsed signals perform the rapid switching as in the case of the prior art, the sensing signal output by the ultrasonic emitter 5 does not need to be as strong as in the prior art therefore the performance demands on the ultrasonic signal source 15 are reduced.

Furthermore, since the rapidly pulsed signal is not necessary, the sensing operation can be carried out under more stable conditions than in the prior art methods.

Still another advantage is that both the ultrasonic emitter 5 and the receiving transducers 7 and 9 respectively, do not need to be capable of both sending and receiving the ultrasonic sensing signal. Therefore, the respective transducers can be selected for their efficiency in their respective tasks, rather that making compromises to facilitate both functions.

Another advantage will be readily apparent in the fact that, with the arrangement according to the present invention, a sensing operation can be carried out quickly and in real time.

As mentioned above, the arrangement according to the instant invention may be employed in "wet" arrangements, popular in the prior art, wherein the object to be tested is covered with a layer of oil or water or other substance, or in cases wherein the object to be tested is immersed in a body of fluid or liquid.

It is however a problem in these wet methods and immersion methods, that the fluid tends to soil or have other undesirable effects on the object to be inspected and/or render the inspection process awkward.

Therefore, in the development of the invention, it was conceived to dispense with the fluids used in the "wet" method and, in lieu thereof, dispose a member formed of a solid high polymer material (preferably having a relatively small modulus of elasticity) between the object to be tested and the ultrasonic emitter 5. However, this too has been found to have some disadvantages.

A few of the disadvantages encountered with this method, include the problem that it is difficult to ensure a perfect coupling between the ultrasonic emitter 5 and the layer of high polymer material. Due to this, the coupling is not satisfactorily stable. Another problem encountered with this method is that, due to the plasticity thereof, there is a tendency for the high polymer material, when force is exerted thereon, to become permanently distorted. When this occurs, the quality of the connection, between the ultrasonic emitter 5 and the high polymer material member, becomes undesirably altered.

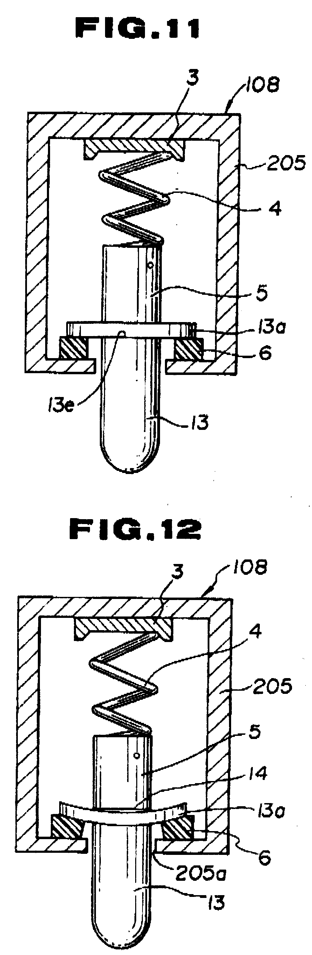

In view of the problem mentioned above, in connection with the permanent damage to the high polymer member, in the eighth embodiment of the invention depicted in Fig. 11, a sensor assembly 108 has been proposed wherein an ultrasound emitting contact 13 is comprised of a high polymer material. In this embodiment, the ultrasound emitting contact 13 is such that it may be easily removed and replaced.

This embodiment spring 4 biases the ultrasonic emitter 5 against an inner side contact surface 13e of the ultrasound emitting contact 13.

The ultrasound emitting contact 13 comprises a flange 13a, which is driven into engagement with a buffer member 6 by the biasing force of the spring 4. The buffer member 6 is disposed between the flange 13a and a radially inwardly extending flange (no numeral) formed at the bottom of the housing unit 205.

In this arrangement, a layer of oil or grease may be provided between the ultrasonic emitter 5 and the inner side contact surface 13e, of the ultrasound emitting contact 13, so as to enhance the connection therebetween.

This embodiment, while providing the improvement wherein the ultrasound emitting contact 13 may be removed and replaced, has been found to suffer the drawbacks that if the engaging force between the ultrasonic emitter 5 and the ultrasound emitting contact 13 is insufficient, there is a tendency for the ultrasound emitting contact 13 to slip and move about with respect to the contact 13 giving rise to problem that the operative coupling between the contact and the emitter becomes inadequate.

These factors tend to result in inconsistency in the ultrasonic sensing signal output by the sensor assembly. On the other hand, if the engaging pressure is too great, there is again the problem of inconsistency or dispersion in the ultrasonic signal output.

For these reasons the problem again arises that rather high operator skill, becomes necessary in order to obtain a dependable and reproducible readings from the sensing unit.

In developing the invention, through experiment and observation, the inventors sought to determine the reason that increasing the engaging pressure beyond a certain value resulted in degradation of the signal output. In these studies it was found that these changes in the characteristics of the sensing signal output came as a result of changes in the shape of the inner side contact surface 13e which engages the ultrasonic emitter 5.

This is because the diameters, of the end of the ultrasonic emitter 5, which engages the ultrasound emitting contact 13, and of the main body of the ultrasound emitting contact 13 must be smaller than than that of the flange 13a. This is an indirect result of the fact that the hole 205a in the lower portion of the housing unit 205, must be greater than the outer diameter of the ultrasonic emitter 5, and the main body of the ultrasound emitting contact 13, so the flange 13a, which is relatively thin, must extend past the inner sides of the hole 205a, so as to rest on the buffer member 6.

Because the flange 13a is relatively weak, strong pressure between the ultrasonic emitter 5 and the ultrasound emitting contact 13, has the tendency to cause the outer peripheral portion of the flange 13a to flex upwards, with the result that the inner side contact surface 13e becomes concave. Due to the plasticity of the material of the ultrasound emitting contact 13, this concavity remains. This results in a gap 14 forming between the ultrasonic emitter 5 and the ultrasound emitting contact 13, which reduces the contact area therebetween.

This gap 14 tends to destroy the integrity of the acoustical coupling between the ultrasonic emitter 5 and the ultrasound emitting contact 13.

In order to alleviate the above problem, it is was thought to make the flange 13a thicker so as to reduce its tendency to flex. This, however, effectively adds to the overall weight and length of the ultrasound emitting contact 13. Since the high polymer material from which the ultrasound emitting contact 13 is formed has some tendency to absorb the ultrasonic signal emitted by the ultrasonic emitter 5, any increase in the overall length of the ultrasound emitting contact 13 tends to reduce the strength of the ultrasonic signal output to the object to be tested.

Thus, the solution of making the flange 13a thicker, exhibits the drawback of reducing the signal strength of the unit. It has therefore been found that there are limits to the acceptable length of the ultrasound emitting contact 13.

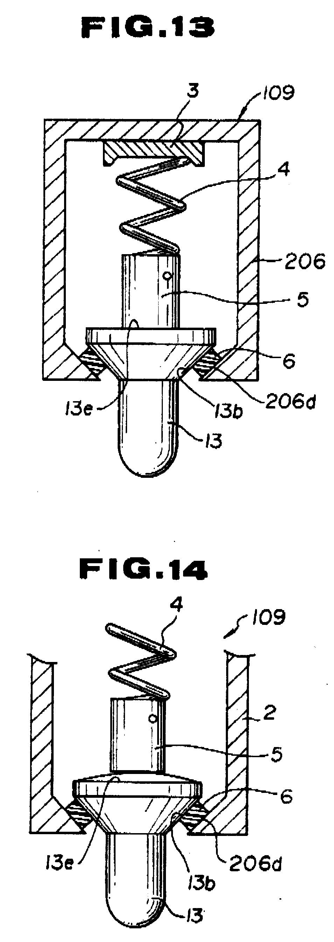

Figs. 13 to 17 show embodiments which were conceived in order to overcome the above mentioned shortcomings, to realize the goals of providing an arrangement wherein the ultrasound emitting contact 13 is resiliently mounted and the contact between itself and the object to be tested is consistently and stably maintained, and to further ensure efficient transmission of an ultrasonic sensing signal to the object to be tested.

These embodiments are further arranged such that the distance between the contact point of the ultrasound emitting contact 13 on the object to be tested and the contact points of the receiving transducers can be set at an optimal value.

As will be appreciated From Fig. 13, which shows a ninth embodiment of the invention, the housing unit 206 of the sensor assembly 109 is essentially similar to that 205 of the eighth one, and differs in that the inner periphery of the opening defined in the lower side thereof, is formed with a tapered seat 206d. The ultrasound emitting contact 13 in this embodiment is provided a tapered shoulder 13b which is supportingly spaced from the tapered seat 206d by the buffer member 6.

With this arrangement, the overall contact quality between the ultrasound emitting contact 13 and the ultrasonic emitter 5 is improved. To account for this, it is believed that when the force of the spring 4 drives the ultrasound emitting contact 13 into the tapered seat 206d, there is a tendency for the pressure between the tapered seat 206d and the tapered shoulder 13b to cause the inner side contact surface 13e to distort into the convex configuration shown in Fig. 14. Even if this distortion occurs it does not have any marked detrimental effect on the coupling efficiency between the ultrasonic emitter 5 and the ultrasound emitting contact 13. Therefore, the efficiency and integrity, of the sensing signal emitted thereby, remains high.

One advantageous effect which is believed to be achieved by this convex configuration, is that, in cases where oil or grease is used to enhance the coupling between the ultrasonic emitter 5 and the inner side contact surface 13e, the lubricate can easily enter and tend to fill the annular space which is created.

Whether the convex configuration of the inner side contact surface 13e occurs or not has still not been completely confirmed. Nevertheless, the tendency for the inner side contact surface 13e to become distorted during use is greatly reduced and would appear to be influenced by the angle of the tapered shoulder 13b.

Although any angle of taper for the tapered shoulder 13b and tapered seat 206d is theoretically possible, it has been found that a taper in the range of thirty degrees to sixty degrees is optimum.

It has also been found that, while theoretically any frequency of sensing signal may be employed in the sensing operation using the sensor assemblies according to the invention, frequencies in the range of 0.1Hz to 10MHz provide the best results.

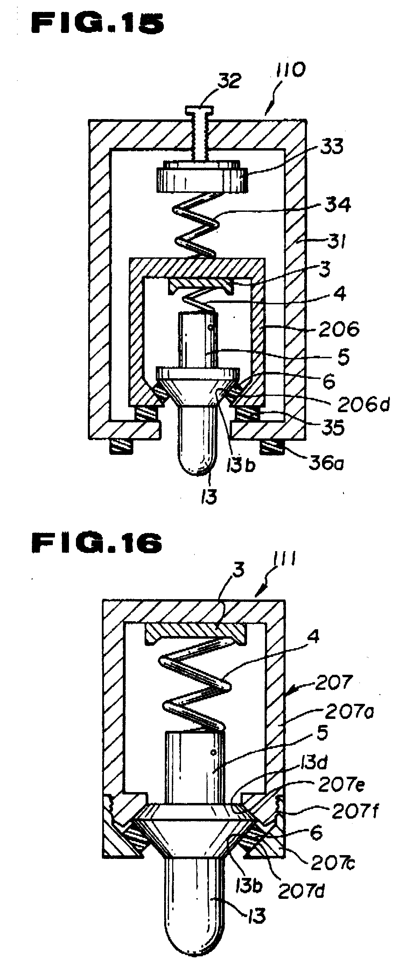

Fig. 15 shows a tenth embodiment of a sensor assembly 110 according to the invention. In this embodiment, the sensor assembly 109, described in connection with the eighth embodiment, is disposed within a second outer housing unit 31. The outer housing unit 31 comprises an outer housing spring 34, one end of which engages the upper side of the housing unit 206, so as to urge it in the engaging direction. At its other end, the outer housing spring 34 engages a pressure sensor 33 which is adjustably connected to the outer housing unit 31, by means of a pressure adjuster screw 32.

At its inner lower surface, the outer housing unit 31 comprises a casing buffer member 35, by which it is resiliently coupled to the housing unit 206, and at its lower side, an outer buffer member 36a, by which it is resiliently isolated from the object to be tested.

In this arrangement the pressure sensor 33 serves to detect the amount of pressure with which the ultrasound emitting contact 13 is being urged into engagement with the object to be tested. This is particularly useful in situations wherein the sensing operation is carried out by robots. Further, due to the fact that the engaging pressure between the ultrasound emitting contact 13 and the object to be tested, can be monitored and adjusted, it is possible to provide consistent and reproducible testing results.

With this arrangement, a further advantage obtained, is that the engaging pressure of the ultrasonic emitter 5 with the object to be tested, through the ultrasound emitting contact 13, can be adjusted independently of the engaging pressures of the receiving transducers 7 and 9. This allows more freedom in adjusting the characteristics of the sensor assembly than is possible in the previous embodiments. It will be noted that the suspension arrangement depicted in Fig. 15 as being applied to the ultrasonic emitter 5, may also be applied in the mounting arrangements of the receiving transducers 7 and 9 so as to facilitate fine tuning of their engaging pressures as well.

It will also be understood, actuating means such as a motor may be disposed within the outer housing unit 31 for the purpose of driving the pressure adjuster screw 32 and adjusting the engaging pressure of the ultrasound emitting contact 13, in accordance with the pressure indicated by the pressure sensor 33.

In the sensor assembly 111 of the eleventh embodiment shown in Fig. 16, the housing unit 207 differs from that 206 of the previous embodiments in that it is divided into upper and lower casing sections 207a, 207c, which are screwed together at a threaded portion 207f.

The upper casing section 207a has an upper tapered seat 207e whose taper is in the opposite direction of that of the lower tapered seat 207d. The upper and lower tapered seats 207e, 207d cooperate to define an essentially V-shaped annular groove around the inner periphery of the lower section of the housing unit 207. The lower tapered seat 207d supports a buffer member 6.

The ultrasound emitting contact 13, according to the eleventh embodiment, is essentially similar in function to that of the previous embodiment except for the fact that, in addition to the tapered shoulder 13b tapering in the downward direction, a upper tapered shoulder 13d is provided, which tapers in the upward direction.

The lower tapered shoulder 13b engages the lower tapered seat 207d through the buffer member 6, while the tapered shoulder 13d engages the upper tapered seat 207e directly.

With this arrangement, while the flexibility in the connection between the housing unit 207 and the ultrasound emitting contact 13 is reduced as the lower casing section 207c is screwed more tightly onto the upper casing section 207a. This tightening of the lower casing section 207c tends to reduce the degree to which the engaging pressure, with which the sensor assembly held in engagement with the object under test, effects the amount of pressure occurring between the ultrasonic emitter 5 and the ultrasound emitting contact 13.

The sensor assembly 112 of the twelfth embodiment of the invention depicted in Fig. 17 is essentially identical to that depicted in Fig. 13 except that a suction cup 36b has been added to the lower side of the housing unit 206. Therefore, disclosure of the identical portions shall hereinafter be omitted for brevity.

The suction cup 36b has, associated therewith, an evacuation tube 37 and an evacuation pump 38. The evacuation pump 38 is arranged to draw air from chamber defined within the suction cup 36b, when the lower portion thereof is in engagement with the object to be tested. In this manner the sensor assembly is brought into stable firm contact with the surface of the object to be tested, by the negative pressure within the suction cup 36b, so as to provide a stable sensor output. The evacuation pump 38 is also operable for selectively allowing atmospheric pressure to be re-established in the chamber so as to allow the housing unit 206 to be removed from the surface of the object under test.

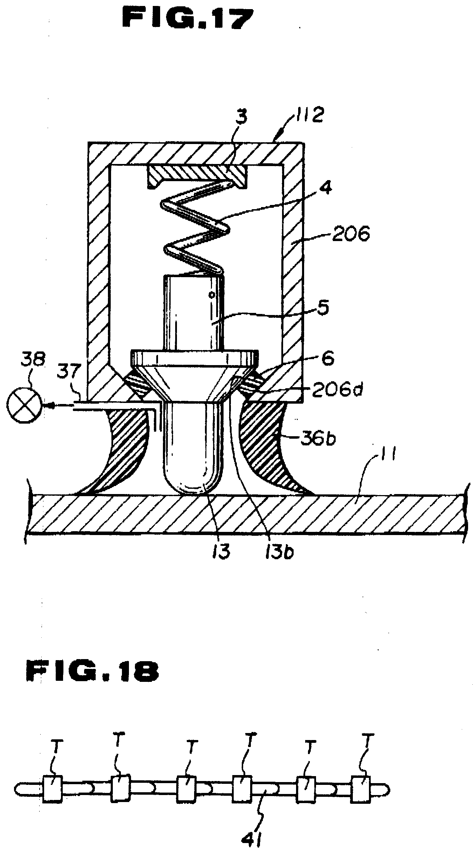

In cases where the housing unit 206 is provided with a suction cup buffer member 36b as in the twelfth embodiment, as the engaging pressure of the transducer is determined by the suction cup 36b, it is possible to arrange a plurality of such transducer units, as indicated by the letters T in Fig. 18, on a flexible arm 41.

Although in the embodiments described above, a spring 4 has been disclosed as the resilient body which biases the transducer down onto the top of the surface under test, it will be readily apparent to those skilled in the art that other means may be used to replace or to augment the spring 4 such as adjuster screw, an elastomeric member or the like.

However, it will be noted that in cases where a screw alone is employed in place of the spring 4, particular attention should be made to ensure that the buffer member 6 is formed of a material which exhibits sufficient resiliency as to additionally provide the function of the resilient body (viz., spring 4).

## Claims

1.  An ultrasonic sensing device comprising:
    - an ultrasonic emitter (5) for emitting an ultrasonic sensing signal to an object (11) to be tested;
    - a first receiving transducer (9) for receiving said ultrasonic sensing signal which is propagated through said object to be tested and for outputting a first received signal (f ($X_1$)),
    - a second receiving transducer (7) for receiving said ultrasonic sensing signal after it has propagated through said object (11) to be tested and for outputting a second received signal (f ($X_2$)), and
    - a housing unit (2; 201; 202; 203; 204; 206, 31) supporting said ultrasonic emitter (5), said first receiving transducer (9) and said second receiving transducer (7) in a predetermined spaced relationship with respect to one another,

    characterized by comparing means (16) for comparing said first and second received signals and providing an output signal (Z) by subtracting said second received signal from the first one.

2.  An ultrasonic sensing device according to claim 1, characterized by a contact member (13) disposed between said ultrasonic emitter (5) and said object (11) to be tested.

3. An ultrasonic sensing device according to claim 2, **characterized** in that said contact member (13) is formed of a high polymer material.

4. An ultrasonic sensing device according to claim 2 or 3, **characterized** in that said contact member (13) is removably attached to said ultrasonic emitter (5).

5. An ultrasonic sensing device according to anyone of claims 2 to 4, **characterized** in that said ultrasonic emitter (5) is resiliently urged into engagement with said contact member (13).

6. An ultrasonic sensing device according to anyone of the claims 2 to 5, **characterized** in that said contact member (13) comprises an engaging portion (13a; 13b) engaging a resilient buffer means (6) for forming a resilient connection between said contact member (13) and said housing unit (2; 201; 202; 203; 204).

7. An ultrasonic sensing device according to claim 6, **characterized** in that said engaging portion engaging said resilient buffer means (6) comprises a tapered section (13b).

8. An ultrasonic sensing device according to claim 6 or 7, **characterized** in that said ultrasonic emitter (5) is resiliently supported on said housing unit (2; 201; 202; 203; 204).

9. An ultrasonic sensing device according to anyone of the preceding claims, **characterized** in that a display means (17) is provided on said housing unit (203) for displaying a result of a comparison made by said comparing means (16).

10. An ultrasonic sensing device according to anyone of the preceding claims, **characterized** by a plurality of at least four transducers (T), each of which being capable of emitting and receiving an ultrasonic signal.

11. An ultrasonic sensing device according to claim 10, **characterized** by an ultrasonic signal generating means (15) for generating an ultrasonic signal and by selection means (21, 23) for selecting which of said plurality of transducers (T) is to be driven to emit an ultrasonic signal produced by said signal generating means (15) and which of the remainder of said plurality of transducers (T) are to receive ultrasonic signals and to output signals to signal processing means (22).

12. An ultrasonic sensing device according to claim 10 to 11, **characterized** in that said plurality of transducers (T) is not less than six.

13. An ultrasonic sensing device according to anyone of the claims 1 to 4, **characterized** by a plurality of transducers and pressure sensing means (33), said plurality of transducers being disposed in said housing unit (206, 31), not less than one transducer of said plurality of transducers being operable as said ultrasonic emitter (5) for emitting an ultrasonic sensing signal and not less than two transducers of said plurality of transducers being operable as said first and second receiving transducers (9, 7) for receiving an ultrasonic signal, said pressure sensing means (33) sensing the pressure with which said not less than one ultrasonic emitter (5) is forced into contact with said object (11) to be tested.

14. An ultrasonic sensing device according to claim 13, **characterized** in that a resilient means (34) is provided between said not less than one ultrasonic emitter (5) and said pressure sensing means (33) for resiliently urging said not less than one ultrasonic emitter (5) toward the object (11) to be tested.

15. An ultrasonic sensing device according to claim 14, **characterized** in that said not less than one ultrasonic emitter (5) is urged by said resilient means (34) into contact with a contact member (13) which provides an operative connection between said ultrasonic emitter (5) and the object (11) to be tested.

16. An ultrasonic sensing device according to anyone of the claims 13 to 15, **characterized** in that said pressure sensing means (33) is provided on a pressure adjusting means (32) which is operable for adjusting said engaging pressure.

17. An ultrasonic sensing device according to anyone of claims 13 to 16, **characterized** in that said housing unit is comprised of an inner housing (206) and an outer housing (31), said inner housing (206) being resiliently mounted within said outer housing (31), said not less than one ultrasonic emitter (5) being disposed in said inner housing (206).

18. An ultrasonic sensing device according to claim 1, **characterized** in that said housing unit (202) comprises a gap (202a) into which the object (11) to be tested can be inserted, said ultrasonic emitter (5) and said first and second receiving transducers (9, 7) being arranged so that said ultrasonic emitter (5) is located on one side of said gap (202a) and said first and second receiving transducers (9, 7) are disposed on the other side of said gap (202a).

19. An ultrasonic sensing device according to claim 18, **characterized** in that said ultrasonic emitter (5) is operatively connected with pressure adjusting means (112) which adjusts the pressure with which said ultrasonic emitter (5) is forced against the object to be tested.

20. An ultrasonic sensing device according to claim 1, **characterized** in that a suction cup (36b) for holding said housing unit (206) on the object (11) to be tested is formed of an elastomeric material and is selectively connectable with a source (38) of sub-atmospheric pressure.

21. An ultrasonic sensing device according to claim 1, **characterized** by pressure sensing means (33) for sensing the pressure with which said ultrasonic emitter (5) is forced Into contact with the object to be tested.

22. An ultrasonic sensing device according to claim 1, **characterized** in that said first receiving transducer (9) and said second receiving transducer (7) are arranged at different distances from said ultrasonic emitter (5) and delay means (24) are provided for delaying the received signal output by that of the first and second receiving transducers (9, 7) which is disposed closer to the ultrasonic transmitter (5) to compensate for a difference in said first and second distances.

**Patentansprüche**

1. Ultraschallmeßgerät mit:
   - einem Ultraschallsensor (5) zum Emittieren eines Ultraschall-Meßsignals an ein zu untersuchendes Objekt (11),
   - einem ersten Empfangs-Wandler (9) zum Empfang des Ultraschall-Meßsignals, das sich durch das zu untersuchende Objekt ausbreitet, und zur Ausgabe eines ersten Empfangssignals (f($X_1$)),
   - einem zweiten Empfangs-Wandler (7) zum Empfang des Ultraschall-Meßsignals, nachdem es sich durch das zu untersuchende Objekt (11) ausgebreitet hat, und zur Ausgabe eines zweiten Empfangssignals (f($X_2$)) und

   - einer Gehäuseeinheit (2; 201; 202; 203; 204; 206, 31), die den Ultraschallsender (5), den ersten Empfangs-Wandler (9) und den zweiten Empfangs-Wandler (7) in einer vorgegebenen Beziehung in Abstand zueinander hält,
   **gekennzeichnet** durch eine Vergleichseinrichtung (16) zum Vergleich der ersten und zweiten Empfangssignale und zur Erzeugung eines Ausgangssignals (Z) durch Subtraktion des zweiten Empfangssignals von dem ersten.

2. Ultraschallmeßgerät nach Anspruch 1, **gekennzeichnet** durch ein zwischen dem Ultraschallsensor (5) und dem zu untersuchenden Objekt (11) eingefügtes Kontaktelement (13).

3. Ultraschallmeßgerät nach Anspruch 2, dadurch **gekennzeichnet**, daß das Kontaktelement (13) aus einem hochpolymeren Material besteht.

4. Ultraschallmeßgerät nach Anspruch 2 oder 3, dadurch **gekennzeichnet**, daß das Kontaktelement (13) lösbar an dem Ultraschallsender (5) angebracht ist.

5. Ultraschallmeßgerät nach einem der Ansprüche 2 bis 4, dadurch **gekennzeichnet**, daß der Ultraschallsender (5) elastisch zur Anlage an dem Kontaktelement (13) vorgespannt ist.

6. Ultraschallmeßgerät nach einem der Ansprüche 2 bis 5, dadurch **gekennzeichnet**, daß das Kontaktelement (13) einen Anlagebereich (13a; 13b) aufweist, der an einer elastischen Puffereinrichtung (6) anliegt, um eine elastische Verbindung zwischen dem Kontaktelement (13) und der Gehäuseeinheit (2; 201; 202; 203; 204) herzustellen.

7. Ultraschallmeßgerät nach Anspruch 6, dadurch **gekennzeichnet**, daß der an der elastischen Puffereinrichtung (6) anliegende Anlagebereich einen verjüngten Abschnitt (13b) aufweist.

8. Ultraschallmeßgerät nach Anspruch 6 oder 7, dadurch **gekennzeichnet**, daß der Ultraschallsender (5) elastisch an der Gehäuseeinheit (2; 201; 202; 203; 204) abgestützt ist.

9. Ultraschallmeßgerät nach einem der vorstehenden Ansprüche, dadurch **gekennzeichnet**, daß eine Anzeigeeinrichtung (17) an der Gehäuseeinheit (203) vorgesehen ist, zum Anzeigen eines Ergebnis eines von der Vergleichseinrichtung (16) durchgeführten Vergleichs.

10. Ultraschallmeßgerät nach einem der vorstehenden Ansprüche, **gekennzeichnet** durch wenigstens vier Wandler (T), von denen jeder in der Lage ist, ein Ultraschallsignal zu senden und zu empfangen.

11. Ultraschallmeßgerät nach Anspruch 10, **gekennzeichnet** durch eine Ultraschall-Signalerzeugungseinrichtung (15) zum Erzeugen eines Ultraschallsignals und durch eine Auswahleinrichtung (21, 23) zur Auswahl, welcher der mehreren Wandler (T) angesteuert wird, um ein von der Signalerzeugungseinrichtung (15) erzeugtes Ultraschallsignal zu senden, und welche der übrigen der mehreren Wandler (T) Ultraschallsignale empfangen und Signale an eine Signalverarbeitungseinrichtung (22) ausgeben sollen.

12. Ultraschallmeßgerät nach Anspruch 10 bis 11, dadurch **gekennzeichnet**, daß die Anzahl der Wandler (T) nicht kleiner als sechs ist.

13. Ultraschallmeßgerät nach einem der Ansprüche 1 bis 4, **gekennzeichnet** durch eine Vielzahl von Wandlern und eine Druckmeßeinrichtung (33), welche Vielzahl von Wandlern in einer Gehäuseeinheit (206, 31) angebracht ist, wobei mindestens ein Wandler aus der Vielzahl der Wandler als Ultraschallsender (5) zum Emittieren eines Ultraschall-Meßsignals betreibbar ist und wenigstens zwei Wandler aus der Vielzahl der Wandler als erste und zweite Empfangs-Wandler (9, 7) zum Empfang eines Ultraschallsignals betreibbar sind und die Druckmeßeinrichtung (33) den Druck mißt, mit dem der wenigstens eine Ultraschallsender (5) gegen das zu untersuchende Objekt (11) angedrückt wird.

14. Ultraschallmeßgerät nach Anspruch 13, dadurch **gekennzeichnet**, daß elastische Mittel (34) zwischen dem wenigstens einen Ultraschallsender (5) und der Druckmeßeinrichtung (33) vorgesehen sind, um den wenigstens einen Ultraschallsender (5) elastisch in Richtung auf das zu untersuchende Objekt (11) zu drücken.

15. Ultraschallmeßgerät nach Anspruch 14, dadurch **gekennzeichnet**, daß der wenigstens eine Ultraschallsender (5) durch die elastischen Mittel (34) zur Anlage gegen ein Kontaktelement (13) gespannt wird, das eine Wirkverbindung zwischen dem Ultraschallsender (5) und dem zu untersuchenden Objekt (11) herstellt.

16. Ultraschallmeßgerät nach einem der Ansprüche 13 bis 15, dadurch **gekennzeichnet**, daß die Druckmeßeinrichtung (33) an einer Druckeinstelleinrichtung (32) vorgesehen ist, die zum Einstellen des Anpreßdruckes betätigbar ist.

17. Ultraschallmeßgerät nach einem der Ansprüche 13 bis 16, dadurch **gekennzeichnet**, daß die Gehäuseeinheit ein inneres Gehäuse (206) und ein äußeres Gehäuse (31) aufweist, wobei das innere Gehäuse (206) elastisch in dem äußeren Gehäuse (31) montiert ist und der wenigstens eine Ultraschallsender (5) in dem inneren Gehäuse (206) angeordnet ist.

18. Ultraschallmeßgerät nach Anspruch 1, dadurch **gekennzeichnet**, daß die Gehäuseeinheit (202) einen Spalt (202a) aufweist, in welchen das zu untersuchende Objekt (11) eingeführt werden kann, wobei der Ultraschallsender (5) und die ersten und zweiten Empfangs-Wandler (9, 7) so angeordnet sind, daß der Ultraschallsender (5) sich auf einer Seite des Spaltes (202a) befindet und die ersten und zweiten Empfangs-Wandler (9, 7) auf der anderen Seite des Spaltes (202a) angeordnet sind.

19. Ultraschallmeßgerät nach Anspruch 18, dadurch **gekennzeichnet**, daß der Ultraschallsender (5) wirkungsmäßig mit einer Druckeinstelleinrichtung (112) verbunden ist, die den Druck einstellt, mit welchem der Ultraschallsender (5) gegen das zu untersuchende Objekt gedrückt wird.

20. Ultraschallmeßgerät nach Anspruch 1, dadurch **gekennzeichnet**, daß ein Saugnapf (36b) zum Halten der Gehäuseeinheit (206) an dem zu untersuchenden Objekt (11) aus einem elastomeren Material hergestellt und wahlweise mit einer Unterdruckquelle (38) verbindbar ist.

21. Ultraschallmeßgerät nach Anspruch 1, **gekennzeichnet** durch eine Druckmeßeinrichtung (33) zum Messen des Druckes, mit dem der Ultraschallsender (5) gegen das zu untersuchende Objekt gespannt wird.

22. Ultraschallmeßgerät nach Anspruch 1, dadurch **gekennzeichnet**, daß der erste Empfangs-Wandler (9) und der zweite Empfangs-Wandler (7) in unterschiedlichen Abständen zu dem Ultraschallsender (5) angeordnet sind und eine Verzögerungseinrichtung (14) vorgesehen ist, zur Verzögerung des Empfangssignals, das von demjenigen der ersten und zweiten Empfangs-Wandler (9, 7) ausgesandt wird, der näher an dem Ultraschallsender (5) liegt, zum Ausgleich einer Differenz zwischen den ersten und zweiten Abständen.

**Revendications**

1. Dispositif de détection ultrasonique comprenant:
   - un émetteur ultrasonique (5) pour émettre un signal de détection ultrasonique vers un objet (11) à tester;
   - un premier transducteur de réception (9) pour recevoir ledit signal de détection ultrasonique qui se propage à travers ledit objet à tester et pour émettre un premier signal de réception (f(X$_1$)),
   - un deuxième transducteur de réception (7) pour recevoir ledit signal de détection ultrasonique après qu'il se soit propagé à travers ledit objet (11) à tester et pour émettre un deuxième signal de réception (f(X$_2$)), et
   
   une unité de boîtier (2; 201; 202; 203; 204; 206, 31) supportant ledit émetteur ultrasonique (5), ledit premier transducteur de réception (9) et ledit deuxième transducteur de réception (7) suivant une relation d'écart prédéterminée les uns par rapport aux autres, caractérisé par un moyen de comparaison (16) pour comparer lesdits premier et deuxième signaux reçus et pour émettre un signal de sortie (Z) en soustrayant ledit deuxième signal reçu du premier.

2. Dispositif de détection ultrasonique selon la revendication 1, caractérisé par un élément de contact (13) disposé entre ledit émetteur ultrasonique (5) et ledit objet (11) à tester.

3. Dispositif de détection ultrasonique selon la revendication 2, caractérisé en ce que ledit élément de contact (13) est réalisé en un matériau de haut polymère.

4. Dispositif de détection ultrasonique selon la revendication 2 ou 3, caractérisé en ce que ledit élément de contact (13) est fixé amoviblement audit émetteur ultrasonique (5).

5. Dispositif de détection ultrasonique selon l'une des revendications 2 à 4, caractérisé en ce que ledit émetteur ultrasonique (5) est sollicité élastiquement en prise avec ledit élément de contact (13).

6. Dispositif de détection ultrasonique selon l'une des revendications 2 à 5, caractérisé en ce que ledit élément de contact (13) comprend une portion de mise en prise (13a; 13b) venant en prise avec un moyen élastique formant tampon (6) pour former une connexion élastique entre ledit élément de contact (13) et ladite unité de boîtier (2; 201; 202; 203; 204).

7. Dispositif de détection ultrasonique selon la revendication 6, caractérisé en ce que ladite portion de mise en prise venant en prise avec ledit moyen élastique formant tampon (6) comprend une section conique (13b).

8. Dispositif de détection ultrasonique selon la revendication 6 ou 7, caractérisé en ce que ledit émetteur ultrasonique (5) est supporté élastiquement sur ladite unité de boitier (2; 201; 202; 203; 204).

9. Dispositif de détection ultrasonique selon l'une des revendications précédentes, caractérisé en ce qu'un moyen d'affichage (17) est prévu sur ladite unité de boîtier (203) pour afficher un résultat d'une comparaison faite par ledit moyen de comparaison (16).

10. Dispositif de détection ultrasonique selon l'une des revendications précédentes, caractérisé par une pluralité d'au moins quatre transducteurs (T), dont chacun est apte à émettre et à recevoir un signal ultrasonique.

11. Dispositif de détection ultrasonique selon la revendication 10, caractérisé par un moyen générateur de signaux ultrasoniques (15) pour produire un signal ultrasonique et par un moyen de sélection (21, 23) pour choisir celui parmi ladite pluralité de transducteur (T) qui doit être entrainé pour émettre un signal ultrasonique produit par ledit moyen producteur de signaux (15) et ceux parmi ladite pluralité de transducteurs (T) qui restent qui doivent recevoir des signaux ultrasoniques et pour émettre des signaux vers le moyen de traitement des signaux (22).

12. Dispositif de détection ultrasonique selon la revendication 10 et 11, caractérisé en ce que ladite pluralité de transducteurs (T) n'est pas inférieure à six.

13. Dispositif de détection ultrasonique selon l'une des revendications 1 à 4, caractérisé par une pluralité de transducteurs et de moyens de détection de pression (33), ladite pluralité de transducteurs étant disposée dans ladite unité de boîtier (206, 31), au moins un transducteur de ladite pluralité de transducteurs pouvant fonctionner comme ledit émetteur ultrasonique (5) pour émettre un signal de détection ultrasonique, et au moins deux transducteurs de ladite pluralité de transducteurs pouvant fonctionner comme lesdits premier et deuxième transducteurs de réception (9, 7) pour recevoir un signal ultrasonique, ledit moyen de détection de pression (33) captant la pression avec laquelle ledit, au moins un, émetteur ultrasonique (5) est contraint à venir en contact avec ledit objet (11) à tester.

14. Dispositif de détection ultrasonique selon la revendication 13, caractérisé en ce qu'un moyen élastique (34) est prévu entre ledit, au moins un, émetteur ultrasonique (5) et ledit moyen de détection de pression (33) pour solliciter élastiquement ledit, au moins un, émetteur ultrasonique (5) vers l'objet (11) à tester.

15. Dispositif de détection ultrasonique selon la revendication 14, caractérisé en ce que ledit, au moins un, émetteur ultrasonique (5) est sollicité par ledit moyen élastique (34) en contact avec un élément de contact (13) qui établit une connexion fonctionnelle entre ledit émetteur ultrasonique (5) et l'objet (11) à tester.

16. Dispositif de détection ultrasonique selon l'une des revendications 13 à 15, caractérisé en ce que ledit moyen de détection de pression (33) est prévu sur un moyen de réglage de pression (32) qui fonctionne pour régler ladite pression de mise en prise.

17. Dispositif de détection ultrasonique selon l'une des revendications 13 à 16, caractérisé en ce que ladite unité de boîtier est constituée d'un boitier intérieur (206) et d'un boitier extérieur (31), ledit boîtier intérieur (206) étant monté élastiquement dans ledit boîtier extérieur (31), ledit, au moins un, émetteur ultrasonique (5) étant disposé dans ledit boîtier intérieur (206).

18. Dispositif de détection ultrasonique selon la revendication 1, caractérisé en ce que ladite unité de boitier (202) comprend un espace (202a) dans lequel l'objet (11) à tester peut être inséré, ledit émetteur ultrasonique (5) et lesdits premier et deuxième transducteurs de réception (9, 7) étant agencés de façon que ledit émetteur ultrasonique (5) soit situé sur un côté dudit espace (202a), et lesdits premier et deuxième transducteurs de réception (9, 7) sont disposés de l'autre côté dudit espace (202a).

19. Dispositif de détection ultrasonique selon la revendication 18, caractérisé en ce que ledit émetteur ultrasonique (5) est opérationnellement relié à un moyen de réglage de pression (112) qui règle la pression avec laquelle ledit émetteur ultrasonique (5) est forcé contre l'objet à tester.

20. Dispositif de détection ultrasonique selon la revendication 1, caractérisé en ce qu'une coupelle d'aspiration (36b) pour retenir ladite unité de boîtier (206) sur l'objet (11) à tester est réalisée en une matière élastomère et peut être connectée sélectivement à une source (38) de pression négative.

21. Dispositif de détection ultrasonique selon la revendication 1, caractérisé par un moyen de détection de pression (33) pour détecter la pression avec laquelle ledit émetteur ultrasonique (5) est forcé en contact avec l'objet à tester.

22. Dispositif de détection ultrasonique selon la revendication 1, caractérisé en ce que ledit premier transducteur de réception (9) et ledit deuxième transducteur de réception (7) sont disposés à des distances différentes dudit émetteur ultrasonique (5), et des moyens de retardement (24) sont prévus pour retarder le signal reçu émis par celui des premier et deuxième transducteurs de réception (9, 7) qui est disposé plus près de l'émetteur ultrasonique (5) pour compenser une différence dans lesdites première et deuxième distances.

# FIG.1
## (PRIOR ART)

# FIG.2

# FIG. 3 (a~d)

**(a)**

DEFECT 9 5 7 11

12

y x₁ x x₂

**(b)**

f(X₁)

x

**(c)**

f(X₂)

x

**(d)**

z

z=f(X₁)-f(X₂)

THRESHOLD

x

# FIG.4

# FIG.5

# FIG.6

EP 0 403 807 B1

# FIG.7 (a~b)

**(a)**

104
7
202
9
112
4
5

**(b)**

202a
104
9(7)
112
4
5
202

# FIG.8

15
ULTRASONIC
SIGNAL
SOURCE

16
SENSOR
SIGNAL
PROCESSOR

17
DISPLAY

203
4
105
9
5
7

# FIG.9

23

MICRO PROCESSOR

15

ULTRASONIC SIGNAL SOURCE

21

ANALOG MULTIPLEXOR

22

DATA PROCESSING BLOCK

T   T   T   T   T   T

# FIG.10

16

15

ULTRASONIC SIGNAL SOURCE

SENSOR SIGNAL PROCESSOR

DELAY CIRCUITS   24

4

107

204

9   5   7

19

EP 0 403 807 B1

# FIG.11

# FIG.12

20

# FIG.13

# FIG.14

EP 0 403 807 B1

# FIG.15

# FIG.16

# FIG.17

# FIG.18